# EUROPÄISCHE PATENTSCHRIFT

(11) **EP 4 477 937 B1**
(45) Veröffentlichungstag und Bekanntmachung des Hinweises auf die Patenterteilung: **08.07.2026**
(21) Anmeldenummer: 23211562.6
(22) Anmeldetag: 22.11.2023
(51) Int. Cl.: F16M 11/08, F16M 11/20, F16M 11/22, F16M 13/02, F16M 11/06, G03B 17/56

(54) **HALTEVORRICHTUNG ZUM HALTEN EINER KAMERA UND VERFAHREN ZUM AUSRICHTEN EINER KAMERA**
HOLDING DEVICE FOR HOLDING A CAMERA AND METHOD FOR ALIGNING A CAMERA
DISPOSITIF DE RETENUE POUR MAINTENIR UNE CAMÉRA ET PROCÉDÉ D'ALIGNEMENT D'UNE CAMÉRA

(43) Veröffentlichungstag der Anmeldung: 18.12.2024
(73) Patentinhaber: Siemens Healthineers AG, 91301 Forchheim (DE)
(72) Erfinder: Betz, Tobias, 91177 Thalmässing (DE); Dederichs, David, 91099 Poxdorf (DE); Herberger, Frank, 91315 Höchstadt (DE)
(74) Vertreter: Siemens Healthineers Patent Attorneys

(56) Entgegenhaltungen:
- EP-A1- 4 137 734
- EP-B1- 3 537 023
- US-B2- 8 205 847

## Beschreibung

Die Erfindung betrifft eine Haltevorrichtung zum Halten einer Kamera. Die Erfindung betrifft ferner ein Verfahren zum Ausrichten einer Kamera.

Die Installation einer Kamera und vergleichbarer Sensoren im Umfeld von medizinischen Bildgebungssystemen, beispielsweise an einer Decke eines medizinischen Untersuchungsraumes, ist insbesondere deshalb eine Herausforderung, weil neben den üblichen gebäudetechnischen Installationen, wie beispielsweise für Beleuchtung, Klimatisierung, Rauchwarnmeldung und Sprinkleranlagen, zusätzlich spezifische klinische Einrichtungen wie beispielsweise Patientenlifte, Deckenstative für Monitore, Strahlenschutz und Injektionsapparate anzubringen sind. Dieser Umstand erfordert Flexibilität bei der räumlichen Positionierung der Kamera für eine Ausrichtung des Sichtfelds der Kamera auf den relevanten Bereich des Medizingeräts. Zu viele Freiheitsgrade können sich jedoch nachteilig auf den Prozess des Ausrichtens auswirken. Außerdem sollten Kabel für die Kamera möglichst verdeckt und sicher vor Quetschung geführt werden.

Als Stand der Technik sind hierbei die EP 3 537 023 B1, US 8 205 847 B2 und EP 4 137 734 A1 zu nennen.

Die Erfindung hat die Aufgabe, eine Alternative zu herkömmlichen Lösungen, die das Halten einer Kamera betreffen, bereitzustellen. Jeder Gegenstand eines unabhängigen Anspruchs löst diese Aufgabe. In den abhängigen Ansprüchen sind weitere vorteilhafte Aspekte der Erfindung berücksichtigt. Unabhängig vom grammatikalischen Geschlecht eines bestimmten Begriffes sind Personen mit männlicher, weiblicher oder anderer Geschlechteridentität mit umfasst.

Die Erfindung betrifft eine Haltevorrichtung zum Halten einer Kamera,
- wobei die Haltevorrichtung ein kameraseitiges Teil, ein kameraseitiges Schwenklager, eine kameraseitige Arretierung, ein kameraseitiges Zwischenstück, ein tragstrukturseitiges Zwischenstück, ein Zwischenstück-Schwenklager, eine Zwischenstück-Arretierung und einen Kabelführungsbereich aufweist,
- wobei das kameraseitige Teil zur Aufnahme der Kamera eingerichtet ist und relativ zu dem kameraseitigen Zwischenstück mittels des kameraseitigen Schwenklagers um eine kameraseitige Schwenkachse schwenkbar gelagert ist, wenn die kameraseitige Arretierung gelöst ist,
- wobei das kameraseitige Zwischenstück relativ zu dem tragstrukturseitigen Zwischenstück mittels des Zwischenstück-Schwenklagers um eine Zwischenstück-Schwenkachse schwenkbar gelagert ist, wenn die Zwischenstück-Arretierung gelöst ist,
- wobei sich der Kabelführungsbereich entlang einer Längslinie des Kabelführungsbereichs durch das tragstrukturseitige Zwischenstück und das kameraseitige Zwischenstück hindurch bis hinein in das kameraseitige Teil erstreckt,
- wobei die Längslinie des Kabelführungsbereichs im Bereich der Zwischenstück-Schwenkachse im Wesentlichen senkrecht zu der Zwischenstück-Schwenkachse verläuft,
- wobei das Zwischenstück-Schwenklager und die Zwischenstück-Arretierung außerhalb des Kabelführungsbereichs angeordnet sind.

Weiterhin ist hiermit eine Haltevorrichtung zum Halten eines Sensors offenbart,
- wobei die Haltevorrichtung ein sensorseitiges Teil, ein sensorseitiges Schwenklager, eine sensorseitige Arretierung, ein sensorseitiges Zwischenstück, ein tragstrukturseitiges Zwischenstück, ein Zwischenstück-Schwenklager, eine Zwischenstück-Arretierung und einen Kabelführungsbereich aufweist,
- wobei das sensorseitige Teil zur Aufnahme des Sensors eingerichtet ist und relativ zu dem sensorseitigen Zwischenstück mittels des sensorseitigen Schwenklagers um eine sensorseitige Schwenkachse schwenkbar gelagert ist, wenn die sensorseitige Arretierung gelöst ist,
- wobei das sensorseitige Zwischenstück relativ zu dem tragstrukturseitigen Zwischenstück mittels des Zwischenstück-Schwenklagers um eine Zwischenstück-Schwenkachse schwenkbar gelagert ist, wenn die Zwischenstück-Arretierung gelöst ist,
- wobei sich der Kabelführungsbereich entlang einer Längslinie des Kabelführungsbereichs durch das tragstrukturseitige Zwischenstück und das sensorseitige Zwischenstück hindurch bis hinein in das sensorseitige Teil erstreckt,
- wobei die Längslinie des Kabelführungsbereichs im Bereich der Zwischenstück-Schwenkachse im Wesentlichen senkrecht zu der Zwischenstück-Schwenkachse verläuft,
- wobei das Zwischenstück-Schwenklager und die Zwischenstück-Arretierung außerhalb des Kabelführungsbereichs angeordnet sind.

Insbesondere kann die Haltevorrichtung zum Halten des Sensors gemäß einem oder mehreren der im Folgenden für die Haltevorrichtung zum Halten der Kamera beschriebenen Aspekte ausgeführt sein. Dabei kann insbesondere der Begriff "kameraseitig" durch den Begriff "sensorseitig" und/oder der Begriff "Kamera" durch den Begriff "Sensor" ersetzt werden. Weiterhin ist hiermit ein Verfahren zum Ausrichten eines Sensors offenbart. Insbesondere kann das Verfahren zum Ausrichten des Sensors gemäß einem oder mehreren der im Folgenden für Verfahren zum Ausrichten der Kamera beschriebenen Aspekte ausgeführt sein. Dabei kann insbesondere der Begriff "kameraseitig" durch den Begriff "sensorseitig" und/oder der Begriff "Kamera" durch den Begriff "Sensor" ersetzt werden.

Insbesondere kann vorgesehen sein, dass ein durch das kameraseitige Zwischenstück verlaufender Abschnitt der Längslinie des Kabelführungsbereichs im Bereich der Zwischenstück-Schwenkachse im Wesentlichen senkrecht zu der Zwischenstück-Schwenkachse verläuft und/oder dass im Bereich der kameraseitigen Schwenkachse im Wesentlichen senkrecht zu der kameraseitigen Schwenkachse verläuft. Insbesondere kann vorgesehen sein, dass das kameraseitige Schwenklager und die kameraseitige Arretierung außerhalb des Kabelführungsbereichs angeordnet sind.

Das kameraseitige Teil kann insbesondere zur formschlüssigen und/oder zerstörungsfrei lösbaren Aufnahme der Kamera eingerichtet sein. Das tragstrukturseitige Zwischenstück kann beispielsweise mittels eines tragstrukturseitigen Teils und einer Tragstruktur-Schnittstelle mit einer Tragstruktur verbunden sein. Die Tragstruktur kann beispielsweise eine Decke, eine Wand und/oder ein Stativ sein.

Insbesondere kann vorgesehen sein, dass das kameraseitige Teil relativ zu dem kameraseitigen Zwischenstück mittels der kameraseitigen Arretierung gegen eine Schwenkbewegung um die kameraseitige Schwenkachse fixiert ist, wenn die kameraseitige Arretierung gespannt ist, und/oder dass das kameraseitige Zwischenstück relativ zu dem tragstrukturseitigen Zwischenstück mittels der Zwischenstück-Arretierung gegen eine Schwenkbewegung um die Zwischenstück-Schwenkachse fixiert ist, wenn die Zwischenstück-Arretierung gespannt ist.

Insbesondere kann die Längslinie innerhalb des Kabelführungsbereichs derart verlaufen, dass ein Kabel auf der Längslinie durch den Kabelführungsbereich verlaufen kann. Die Längslinie kann eine Zentrallinie des Kabelführungsbereichs sein und/oder von einer Zentrallinie des Kabelführungsbereichs abweichen. Insbesondere können in der Haltevorrichtung mehrere Kabelführungsbereiche ausgebildet sein, die beispielsweise miteinander zusammenhängen können und/oder im Wesentlichen parallel zueinander verlaufen können.

Die Kamera kann beispielsweise eine 2D-Kamera und/oder eine 3D-Kamera sein. Diese Lösung ermöglicht einen abgeschlossenen mechanischen Aufbau mit geringem Platzbedarf, wobei gleichzeitig durch die ausgehöhlte Ausführung eine Kabelführung in die Haltevorrichtung integriert werden kann.

Eine Ausführungsform sieht vor, dass die kameraseitige Schwenkachse senkrecht zu der Zwischenstück-Schwenkachse ist. Insbesondere können die kameraseitige Schwenkachse und die Zwischenstück-Schwenkachse die Achsen eines Kreuzgelenks, insbesondere eines hohlen Kreuzgelenks bilden.

Eine Ausführungsform sieht vor, dass die kameraseitige Schwenkachse und die Zwischenstück-Schwenkachse entlang eines durch das kameraseitige Zwischenstück verlaufenden Abschnitts der Längslinie des Kabelführungsbereichs voneinander beabstandet sind, insbesondere derart beabstandet sind, dass sich die kameraseitige Schwenkachse entlang der Längslinie des Kabelführungsbereichs zwischen der Zwischenstück-Schwenkachse und der Kamera befindet, wenn die Kamera in das kameraseitige Teil aufgenommen ist. Die kameraseitige Schwenkachse kann insbesondere windschief zu der Zwischenstück-Schwenkachse sein.

Eine Ausführungsform sieht vor, dass das kameraseitige Zwischenstück einen Rahmen, einen ersten plattenförmigen Fortsatz und einen zweiten plattenförmigen Fortsatz aufweist,
- wobei sich der Kabelführungsbereich durch den Rahmen hindurch erstreckt,
- wobei sich der erste plattenförmige Fortsatz flächig in einer ersten Ebene von dem Rahmen bis zu einem ersten Bereich des Zwischenstück-Schwenklagers erstreckt, wobei die erste Ebene zu der Zwischenstück-Schwenkachse senkrecht ist,
- wobei sich der zweite plattenförmige Fortsatz flächig in einer zweiten Ebene von dem Rahmen bis zu einem zweiten Bereich des Zwischenstück-Schwenklagers erstreckt, wobei die zweite Ebene zu der Zwischenstück-Schwenkachse senkrecht ist,
- wobei sich der Kabelführungsbereich im Bereich des kameraseitigen Zwischenstücks zwischen der ersten Ebene und der zweiten Ebene befindet.

Der Rahmen kann beispielsweise vierseitig sein. Der Rahmen kann beispielsweise um die Längslinie des Kabelführungsbereichs herum umlaufend geschlossen sein. Insbesondere kann vorgesehen sein, dass sich der Kabelführungsbereich im Bereich der Zwischenstück-Schwenkachse zwischen dem ersten plattenförmigen Fortsatz und dem zweiten plattenförmigen Fortsatz befindet und/oder dass sich der Kabelführungsbereich im Bereich der Zwischenstück-Schwenkachse zwischen dem ersten Bereich des Zwischenstück-Schwenklagers und dem zweiten Bereich des Zwischenstück-Schwenklagers befindet.

Insbesondere kann vorgesehen sein, dass das kameraseitige Zwischenstück einen dritten plattenförmigen Fortsatz und einen vierten plattenförmigen Fortsatz aufweist,
- wobei sich der dritte plattenförmige Fortsatz flächig in einer dritten Ebene von dem Rahmen bis zu einem ersten Bereich des kameraseitigen Schwenklagers erstreckt, wobei die dritte Ebene zu der kameraseitigen Schwenkachse senkrecht ist,
- wobei sich der vierte plattenförmige Fortsatz flächig in einer vierten Ebene von dem Rahmen bis zu einem zweiten Bereich des kameraseitigen Schwenklagers erstreckt, wobei die vierte Ebene zu der kameraseitigen Schwenkachse senkrecht ist,
- wobei sich der Kabelführungsbereich im Bereich des kameraseitigen Zwischenstücks zwischen der dritten Ebene und der vierten Ebene befindet.

Eine Ausführungsform sieht vor, dass der Rahmen eine erste Rahmen-Seitenfläche und eine zweite Rahmen-Seitenfläche aufweist, wobei der erste Bereich des Zwischenstück-Schwenklagers mittels des ersten plattenförmigen Fortsatzes mit der ersten Rahmen-Seitenfläche verbunden ist, wobei der zweite Bereich des Zwischenstück-Schwenklagers mittels des zweiten plattenförmigen Fortsatzes mit der zweiten Rahmen-Seitenfläche verbunden ist.

Eine Ausführungsform sieht vor, dass die erste Rahmen-Seitenfläche zu der Zwischenstück-Schwenkachse senkrecht ist und eine Kante der ersten Rahmen-Seitenfläche um die Zwischenstück-Schwenkachse kreisbogenförmig gekrümmt ist, wobei die zweite Rahmen-Seitenfläche zu der Zwischenstück-Schwenkachse senkrecht ist und eine Kante der zweiten Rahmen-Seitenfläche um die Zwischenstück-Schwenkachse kreisbogenförmig gekrümmt ist.

Insbesondere kann vorgesehen sein, dass der Rahmen eine dritte Rahmen-Seitenfläche und eine vierte Rahmen-Seitenfläche aufweist, wobei der erste Bereich des kameraseitigen Schwenklagers mittels des dritten plattenförmigen Fortsatzes mit der dritten Rahmen-Seitenfläche verbunden ist, wobei der zweite Bereich des kameraseitigen Schwenklagers mittels des vierten plattenförmigen Fortsatzes mit der vierten Rahmen-Seitenfläche verbunden ist. Insbesondere kann vorgesehen sein, dass die dritte Rahmen-Seitenfläche zu der kameraseitigen Schwenkachse senkrecht ist und eine Kante der dritten Rahmen-Seitenfläche um die kameraseitige Schwenkachse kreisbogenförmig gekrümmt ist, wobei die vierte Rahmen-Seitenfläche zu der kameraseitigen Schwenkachse senkrecht ist und eine Kante der vierten Rahmen-Seitenfläche um die kameraseitige Schwenkachse kreisbogenförmig gekrümmt ist.

Die erste Rahmen-Seitenfläche kann insbesondere plan und/oder zu der ersten Ebene parallel sein. Die erste Rahmen-Seitenfläche und der erste plattenförmige Fortsatz können insbesondere komplanar sein und/oder flächig aneinander anschließen, insbesondere in einer zu der ersten Ebene im Wesentlichen parallelen Anschlussebene flächig aneinander anschließen. Die zweite Rahmen-Seitenfläche kann insbesondere plan und/oder zu der zweiten Ebene parallel sein. Die zweite Rahmen-Seitenfläche und der zweite plattenförmige Fortsatz können insbesondere komplanar sein und/oder flächig aneinander anschließen, insbesondere in einer zu der zweiten Ebene im Wesentlichen parallelen Anschlussebene flächig aneinander anschließen.

Die dritte Rahmen-Seitenfläche kann insbesondere plan und/oder zu der dritten Ebene parallel sein. Die dritte Rahmen-Seitenfläche und der dritte plattenförmige Fortsatz können insbesondere komplanar sein und/oder flächig aneinander anschließen, insbesondere in einer zu der dritten Ebene im Wesentlichen parallelen Anschlussebene flächig aneinander anschließen. Die vierte Rahmen-Seitenfläche kann insbesondere plan und/oder zu der vierte Ebene parallel sein. Die vierte Rahmen-Seitenfläche und der vierte plattenförmige Fortsatz können insbesondere komplanar sein und/oder flächig aneinander anschließen, insbesondere in einer zu der vierten Ebene im Wesentlichen parallelen Anschlussebene flächig aneinander anschließen. Insbesondere kann vorgesehen sein, dass die erste Rahmen-Seitenfläche und die zweite Rahmen-Seitenfläche mittels der dritten Rahmen-Seitenfläche und der vierten Rahmen-Seitenfläche miteinander verbunden sind.

Eine Ausführungsform sieht vor, dass das tragstrukturseitige Zwischenstück eine erste tragstrukturseitige Seitenfläche und eine zweite tragstrukturseitige Seitenfläche aufweist,
- wobei sich der Kabelführungsbereich im Bereich des tragstrukturseitigen Zwischenstücks zwischen der ersten tragstrukturseitigen Seitenfläche und der zweiten tragstrukturseitigen Seitenfläche befindet,
- wobei die erste tragstrukturseitige Seitenfläche zu der Zwischenstück-Schwenkachse senkrecht ist und eine Kante der ersten tragstrukturseitigen Seitenfläche um die Zwischenstück-Schwenkachse kreisbogenförmig gekrümmt ist, wobei die Kante der ersten tragstrukturseitigen Seitenfläche an die Kante der ersten Rahmen-Seitenfläche angrenzt, insbesondere derart angrenzt, dass ein Spalt zwischen der Kante der ersten tragstrukturseitigen Seitenfläche und der Kante der ersten Rahmen-Seitenfläche kreisbogenförmig um die Zwischenstück-Schwenkachse verläuft,
- wobei die zweite tragstrukturseitige Seitenfläche zu der Zwischenstück-Schwenkachse senkrecht ist und eine Kante der zweiten tragstrukturseitigen Seitenfläche um die Zwischenstück-Schwenkachse kreisbogenförmig gekrümmt ist, wobei die Kante der zweiten tragstrukturseitigen Seitenfläche an die Kante der zweiten Rahmen-Seitenfläche angrenzt, insbesondere derart angrenzt, dass ein Spalt zwischen der Kante der zweiten tragstrukturseitigen Seitenfläche und der Kante der zweiten Rahmen-Seitenfläche kreisbogenförmig um die Zwischenstück-Schwenkachse verläuft.

Somit kann das kameraseitige Zwischenstück relativ zu dem tragstrukturseitigen Zwischenstück um die Zwischenstück-Schwenkachse innerhalb eines entsprechenden Winkelbereichs geschwenkt werden, ohne den Spalt zwischen den Kanten der Seitenflächen zu vergrößern. Somit ist es möglich, den Kabelführungsbereich an verschiedenen Winkelpositionen, die mittels einer Schwenkbewegung des kameraseitigen Zwischenstücks relativ zu dem tragstrukturseitigen Zwischenstück um die Zwischenstück-Schwenkachse erreicht werden können, mittels der Rahmen-Seitenflächen und der tragstrukturseitigen Seitenfläche gegen die Umgebung abzugrenzen.

Insbesondere kann vorgesehen sein, dass die Kante der ersten Rahmen-Seitenfläche um die Zwischenstück-Schwenkachse kreisbogenförmig konkav gekrümmt ist, dass die Kante der zweiten Rahmen-Seitenfläche um die Zwischenstück-Schwenkachse kreisbogenförmig konkav gekrümmt ist, dass die Kante der ersten tragstrukturseitigen Seitenfläche um die Zwischenstück-Schwenkachse kreisbogenförmig konvex gekrümmt ist und dass die Kante der zweiten tragstrukturseitigen Seitenfläche um die Zwischenstück-Schwenkachse kreisbogenförmig konvex gekrümmt ist. Alternativ kann vorgesehen sein, dass die Kante der ersten Rahmen-Seitenfläche um die Zwischenstück-Schwenkachse kreisbogenförmig konvex gekrümmt ist, dass die Kante der zweiten Rahmen-Seitenfläche um die Zwischenstück-Schwenkachse kreisbogenförmig konvex gekrümmt ist, dass die Kante der ersten tragstrukturseitigen Seitenfläche um die Zwischenstück-Schwenkachse kreisbogenförmig konkav gekrümmt ist und dass die Kante der zweiten tragstrukturseitigen Seitenfläche um die Zwischenstück-Schwenkachse kreisbogenförmig konkav gekrümmt ist.

Insbesondere kann vorgesehen sein, dass das kameraseitige Teil eine erste kameraseitige Seitenfläche und eine zweite kameraseitige Seitenfläche aufweist,
- wobei sich der Kabelführungsbereich im Bereich des kameraseitigen Teils zwischen der ersten kameraseitigen Seitenfläche und der zweiten kameraseitigen Seitenfläche befindet,
- wobei die erste kameraseitige Seitenfläche zu der kameraseitigen Schwenkachse senkrecht ist und eine Kante der ersten kameraseitigen Seitenfläche um die kameraseitige Schwenkachse kreisbogenförmig gekrümmt ist, wobei die Kante der ersten kameraseitigen Seitenfläche an die Kante der dritten Rahmen-Seitenfläche angrenzt, insbesondere derart angrenzt, dass ein Spalt zwischen der Kante der ersten kameraseitigen Seitenfläche und der Kante der dritten Rahmen-Seitenfläche kreisbogenförmig um die kameraseitige Schwenkachse verläuft,
- wobei die zweite kameraseitige Seitenfläche zu der kameraseitigen Schwenkachse senkrecht ist und eine Kante der zweiten kameraseitigen Seitenfläche um die kameraseitige Schwenkachse kreisbogenförmig gekrümmt ist, wobei die Kante der zweiten kameraseitigen Seitenfläche an die Kante der vierten Rahmen-Seitenfläche angrenzt, insbesondere derart angrenzt, dass ein Spalt zwischen der Kante der zweiten kameraseitigen Seitenfläche und der Kante der vierten Rahmen-Seitenfläche kreisbogenförmig um die kameraseitige Schwenkachse verläuft.

Insbesondere kann vorgesehen sein, dass die Kante der dritten Rahmen-Seitenfläche um die kameraseitige Schwenkachse kreisbogenförmig konkav gekrümmt ist, dass die Kante der vierten Rahmen-Seitenfläche um die kameraseitige Schwenkachse kreisbogenförmig konkav gekrümmt ist, dass die Kante der ersten kameraseitigen Seitenfläche um die kameraseitige Schwenkachse kreisbogenförmig konvex gekrümmt ist und dass die Kante der zweiten kameraseitigen Seitenfläche um die kameraseitige Schwenkachse kreisbogenförmig konvex gekrümmt ist. Alternativ kann vorgesehen sein, dass die Kante der dritten Rahmen-Seitenfläche um die kameraseitige Schwenkachse kreisbogenförmig konvex gekrümmt ist, dass die Kante der vierten Rahmen-Seitenfläche um die kameraseitige Schwenkachse kreisbogenförmig konvex gekrümmt ist, dass die Kante der ersten kameraseitigen Seitenfläche um die kameraseitige Schwenkachse kreisbogenförmig konkav gekrümmt ist und dass die Kante der zweiten kameraseitigen Seitenfläche um die kameraseitige Schwenkachse kreisbogenförmig konkav gekrümmt ist.

Die Erfindung sieht vor, dass die Haltevorrichtung ein tragstrukturseitiges Teil, ein tragstrukturseitiges Schwenklager und eine tragstrukturseitige Arretierung aufweist,
- wobei das tragstrukturseitige Zwischenstück relativ zu dem tragstrukturseitigen Teil mittels des tragstrukturseitigen Schwenklagers um eine tragstrukturseitige Schwenkachse schwenkbar gelagert ist, wenn die tragstrukturseitige Arretierung gelöst ist,
- wobei sich der Kabelführungsbereich durch das tragstrukturseitige Teil hindurch bis zu dem tragstrukturseitigen Zwischenstück entlang der Längslinie des Kabelführungsbereichs erstreckt,
- wobei ein durch das tragstrukturseitige Teil verlaufender Abschnitt der Längslinie des Kabelführungsbereichs im Wesentlichen parallel zu der tragstrukturseitigen Schwenkachse ist,
- wobei das tragstrukturseitige Schwenklager und die tragstrukturseitige Arretierung außerhalb des Kabelführungsbereichs angeordnet sind.

Insbesondere kann vorgesehen sein, dass das tragstrukturseitige Zwischenstück relativ zu dem tragstrukturseitigen Teil mittels der tragstrukturseitigen Arretierung gegen eine Schwenkbewegung um die tragstrukturseitige Schwenkachse fixiert ist, wenn die tragstrukturseitige Arretierung gespannt ist.

Eine Ausführungsform sieht vor, dass die tragstrukturseitige Schwenkachse senkrecht zu der Zwischenstück-Schwenkachse ist. Insbesondere kann vorgesehen sein, dass die tragstrukturseitige Schwenkachse komplanar zu der kameraseitigen Schwenkachse ist.

Eine Ausführungsform sieht vor, dass die tragstrukturseitige Schwenkachse und die Zwischenstück-Schwenkachse entlang eines durch das tragstrukturseitige Zwischenstück verlaufenden Abschnitts der Längslinie des Kabelführungsbereichs voneinander beabstandet sind, insbesondere derart beabstandet sind, dass sich die Zwischenstück-Schwenkachse entlang der Längslinie des Kabelführungsbereichs zwischen der tragstrukturseitigen Schwenkachse und der kameraseitigen Schwenkachse befindet.

Eine Ausführungsform sieht vor, dass die Haltevorrichtung ein Netzteil und ein Netzkabel zur elektrischen Energieversorgung der Kamera aufweist, wobei das Netzteil im Inneren des tragstrukturseitigen Teils angeordnet ist, wobei das Netzkabel innerhalb des Kabelführungsbereichs von dem Netzteil bis hinein in das kameraseitige Teil verläuft. Insbesondere im Wesentlichen dem Verlauf der Längslinie des Kabelführungsbereichs folgend verläuft.

Die Erfindung sieht vor, dass das tragstrukturseitige Teil zylinderförmig ist, wobei eine Zylinderachse des tragstrukturseitigen Teils die tragstrukturseitige Schwenkachse bildet. Das tragstrukturseitige Teil kann beispielsweise ein Hohlrohr sein.

Die Erfindung sieht vor, dass die tragstrukturseitige Arretierung einen ersten Spannkeil aufweist, wobei ein Spannen der tragstrukturseitigen Arretierung ein Drücken des ersten Spannkeils gegen eine Mantelfläche des tragstrukturseitigen Teils derart bewirkt, dass eine reibschlüssige Fixierung des tragstrukturseitigen Zwischenstücks relativ zu dem tragstrukturseitigen Teil erfolgt.

Insbesondere kann vorgesehen sein, dass das tragstrukturseitige Zwischenstück eine erste Verbindungseinheit aufweist,
- wobei das tragstrukturseitige Teil eine zweite Verbindungseinheit aufweist, die zu der ersten Verbindungseinheit derart korrespondierend ausgebildet ist, dass mittels der ersten Verbindungseinheit und der zweiten Verbindungseinheit eine Verbindung hergestellt werden kann, welche einer Translation des tragstrukturseitigen Zwischenstücks relativ zu dem tragstrukturseitigen Teil, die zu der tragstrukturseitigen Schwenkachse parallel ist, formschlüssig entgegenwirkt, wenn die tragstrukturseitige Arretierung gelöst ist,
- wobei das tragstrukturseitige Zwischenstück relativ zu dem tragstrukturseitigen Teil mittels des tragstrukturseitigen Schwenklagers um die tragstrukturseitige Schwenkachse schwenkbar gelagert ist, wenn die tragstrukturseitige Arretierung gelöst ist und die Verbindung mittels der ersten Verbindungseinheit und der zweiten Verbindungseinheit hergestellt ist.

Durch die Verbindung mittels der ersten Verbindungseinheit und der zweiten Verbindungseinheit ist das tragstrukturseitige Zwischenstück gegen die zu der tragstrukturseitigen Schwenkachse parallele Translation relativ zu dem tragstrukturseitigen Teil, insbesondere gegen ein Herausfallen, gesichert, während durch eine Schwenkbewegung des tragstrukturseitigen Zwischenstücks relativ zu dem tragstrukturseitigen Teil um die tragstrukturseitige Schwenkachse eine Winkelposition um die tragstrukturseitige Schwenkachse eingestellt werden kann.

Insbesondere kann vorgesehen sein, dass durch die reibschlüssige Fixierung des tragstrukturseitigen Zwischenstücks relativ zu dem tragstrukturseitigen Teil das tragstrukturseitige Zwischenstücks sowohl gegen die zu der tragstrukturseitigen Schwenkachse parallele Translation relativ zu dem tragstrukturseitigen Teil als auch gegen eine Schwenkbewegung um die tragstrukturseitige Schwenkachse relativ zu dem tragstrukturseitigen Teil gesichert ist.

Die Erfindung betrifft ferner ein System, aufweisend ein medizinisches Bildgebungsgerät, eine Kamera und eine erfindungsgemäße Haltevorrichtung zum Halten der Kamera, wobei die Kamera in das kameraseitige Teil der Haltevorrichtung aufgenommen ist. Insbesondere kann vorgesehen sein, dass die tragstrukturseitige Schwenkachse im Wesentlichen vertikal ist und/oder dass die Zwischenstück-Schwenkachse im Wesentlichen horizontal ist. Das System kann insbesondere einen Satz von Kabeln aufweisen, welche beispielsweise von der Tragstruktur kommend innerhalb des Kabelführungsbereichs bis in den kameraseitigen Teil hinein verlaufen und mit der Kamera verbunden sind. Das System kann beispielsweise die Tragstruktur-Schnittstelle und/oder die Tragstruktur aufweisen.

Eine Ausführungsform sieht vor, dass das medizinische Bildgebungsgerät ein Computertomographiegerät, ein C-Bogen-Röntgengerät oder ein Magnetresonanztomographiegerät ist.

Die Erfindung betrifft ferner ein Verfahren zum Ausrichten einer Kamera, wobei die Kamera in das kameraseitige Teil einer erfindungsgemäße Haltevorrichtung aufgenommen ist, wobei die kameraseitige Arretierung gelöst wird, das kameraseitige Teil relativ zu dem kameraseitigen Zwischenstück um die kameraseitige Schwenkachse geschwenkt wird und die kameraseitige Arretierung gespannt wird, wobei die Zwischenstück-Arretierung gelöst wird, das kameraseitige Zwischenstück relativ zu dem tragstrukturseitigen Zwischenstück um die Zwischenstück-Schwenkachse geschwenkt wird und die Zwischenstück-Arretierung gespannt wird.

Eine Ausführungsform sieht vor, dass die tragstrukturseitige Arretierung gelöst wird, das tragstrukturseitige Zwischenstück relativ zu dem tragstrukturseitigen Teil um die tragstrukturseitige Schwenkachse geschwenkt wird und die kameraseitige Arretierung gespannt wird. Insbesondere können eine Schwenkbewegung des kameraseitigen Teils relativ zu dem kameraseitigen Zwischenstück um die kameraseitige Schwenkachse und eine Schwenkbewegung des tragstrukturseitigen Zwischenstücks relativ zu dem tragstrukturseitigen Teil um die tragstrukturseitige Schwenkachse, derart kombiniert werden, dass sich eine reine Translation des kameraseitigen Teils im Raum ergibt und/oder dass die Positionsänderung des kameraseitigen Teils keine rotatorische Komponente hat, wobei die kameraseitige Schwenkachse zu der tragstrukturseitigen Schwenkachse parallel ist. Dabei kann ein Einstellbereich der translatorischen Ausrichtung durch einen Abstand der kameraseitigen Schwenkachse und der tragstrukturseitigen Schwenkachse voneinander definiert sein.

Im Rahmen der Erfindung können Merkmale, welche in Bezug auf unterschiedliche Ausführungsformen der Erfindung und/oder unterschiedliche Anspruchskategorien (Verfahren, Verwendung, Vorrichtung, System, Anordnung usw.) beschrieben sind, zu weiteren Ausführungsformen der Erfindung kombiniert werden. Beispielsweise kann ein Anspruch, der eine Vorrichtung betrifft, auch mit Merkmalen, die im Zusammenhang mit einem Verfahren beschrieben oder beansprucht sind, weitergebildet werden und umgekehrt. Funktionale Merkmale eines Verfahrens können dabei durch entsprechend ausgebildete gegenständliche Komponenten ausgeführt werden. Die Verwendung der unbestimmten Artikel "ein" bzw. "eine" schließt nicht aus, dass das betroffene Merkmal auch mehrfach vorhanden sein kann. Als im Wesentlichen parallel kann beispielsweise genau parallel oder ein Winkelabstand mit einem Absolutbetrag von weniger als 2 Grad, insbesondere von weniger als 1 Grad, verstanden werden. Als im Wesentlichen senkrecht kann beispielsweise genau senkrecht oder ein Winkelabstand zwischen 88 Grad und 92 Grad, insbesondere zwischen 89 Grad und 91 Grad, verstanden werden.

Im Folgenden wird die Erfindung anhand von Ausführungsbeispielen unter Hinweis auf die beigefügten Figuren erläutert. Die Darstellung in den Figuren ist schematisch, stark vereinfacht und nicht zwingend maßstabsgetreu.

Die Fig. 1 bis Fig. 6 zeigen jeweils eine Haltevorrichtung gemäß einem ersten Beispiel.

Die Fig. 7 zeigt eine Haltevorrichtung gemäß einem zweiten Beispiel.

Die Fig. 8 zeigt ein System mit einem medizinischen Bildgebungsgerät und der Haltevorrichtung.

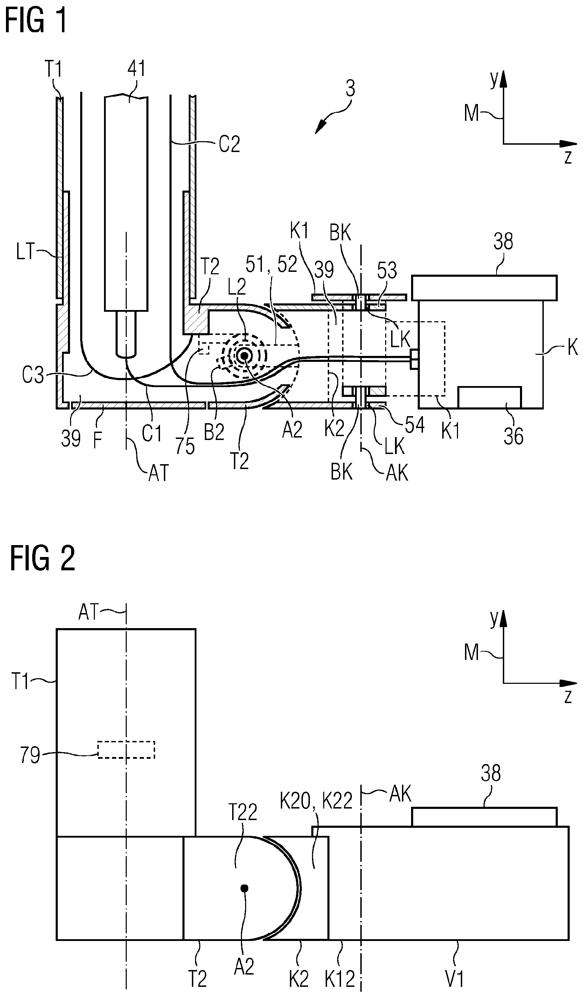

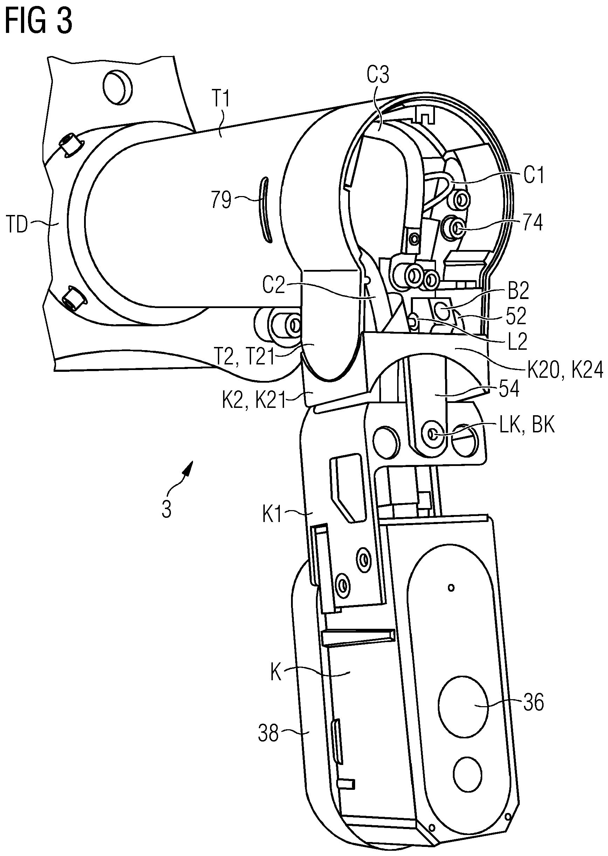

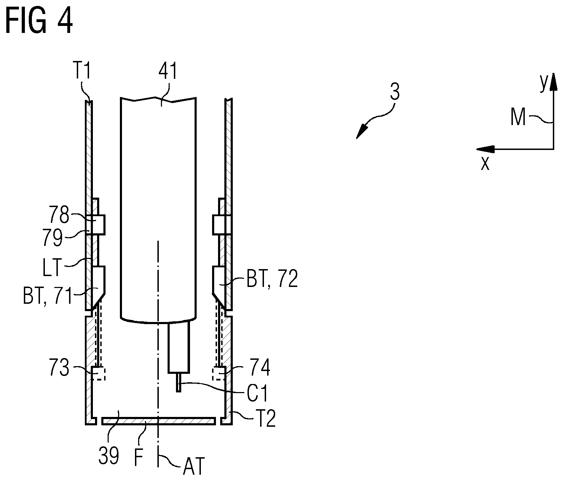

Die Fig. 1 bis Fig. 6 zeigen jeweils eine Haltevorrichtung gemäß einem ersten Beispiel.

Fig. 1 zeigt die Haltevorrichtung 3 zum Halten einer Kamera K,
- wobei die Haltevorrichtung 3 ein kameraseitiges Teil K1, ein kameraseitiges Schwenklager LK, eine kameraseitige Arretierung BK, ein kameraseitiges Zwischenstück K2, ein tragstrukturseitiges Zwischenstück T2, ein Zwischenstück-Schwenklager L2, eine Zwischenstück-Arretierung B2 und einen Kabelführungsbereich 39 aufweist,
- wobei das kameraseitige Teil K1 zur Aufnahme der Kamera K eingerichtet ist und relativ zu dem kameraseitigen Zwischenstück K2 mittels des kameraseitigen Schwenklagers LK um eine kameraseitige Schwenkachse AK schwenkbar gelagert ist, wenn die kameraseitige Arretierung BK gelöst ist,
- wobei das kameraseitige Zwischenstück K2 relativ zu dem tragstrukturseitigen Zwischenstück T2 mittels des Zwischenstück-Schwenklagers L2 um eine Zwischenstück-Schwenkachse A2 schwenkbar gelagert ist, wenn die Zwischenstück-Arretierung B2 gelöst ist,
- wobei sich der Kabelführungsbereich 39 entlang einer Längslinie des Kabelführungsbereichs 39 durch das tragstrukturseitige Zwischenstück T2 und das kameraseitige Zwischenstück K2 hindurch bis hinein in das kameraseitige Teil K1 erstreckt,
- wobei die Längslinie des Kabelführungsbereichs 39 im Bereich der Zwischenstück-Schwenkachse A2 im Wesentlichen senkrecht zu der Zwischenstück-Schwenkachse A2 verläuft,
- wobei das Zwischenstück-Schwenklager L2 und die Zwischenstück-Arretierung B2 außerhalb des Kabelführungsbereichs 39 angeordnet sind.

Die kameraseitige Schwenkachse AK ist senkrecht zu der Zwischenstück-Schwenkachse A2. Die kameraseitige Schwenkachse AK und die Zwischenstück-Schwenkachse A2 sind entlang eines durch das kameraseitige Zwischenstück K2 verlaufenden Abschnitts der Längslinie des Kabelführungsbereichs 39 voneinander beabstandet.

Gemäß dem gezeigten Beispiel ist vorgesehen, dass das kameraseitige Zwischenstück K2 einen Rahmen K20, einen ersten plattenförmigen Fortsatz 51 und einen zweiten plattenförmigen Fortsatz 52 aufweist,
- wobei sich der Kabelführungsbereich 39 durch den Rahmen K20 hindurch erstreckt,
- wobei sich der erste plattenförmige Fortsatz 51 flächig in einer ersten Ebene von dem Rahmen K20 bis zu einem ersten Bereich des Zwischenstück-Schwenklagers L2 erstreckt, wobei die erste Ebene zu der Zwischenstück-Schwenkachse A2 senkrecht ist,
- wobei sich der zweite plattenförmige Fortsatz 52 flächig in einer zweiten Ebene von dem Rahmen K20 bis zu einem zweiten Bereich des Zwischenstück-Schwenklagers L2 erstreckt, wobei die zweite Ebene zu der Zwischenstück-Schwenkachse A2 senkrecht ist,
- wobei sich der Kabelführungsbereich 39 im Bereich des kameraseitigen Zwischenstücks K2 zwischen der ersten Ebene und der zweiten Ebene befindet.

Der Rahmen K20 kann beispielsweise vierseitig sein. Der Rahmen K20 kann beispielsweise um die Längslinie des Kabelführungsbereichs 39 herum umlaufend geschlossen sein. Insbesondere kann vorgesehen sein, dass sich der Kabelführungsbereich 39 im Bereich der Zwischenstück-Schwenkachse A2 zwischen dem ersten plattenförmigen Fortsatz 51 und dem zweiten plattenförmigen Fortsatz 52 befindet und/oder dass sich der Kabelführungsbereich 39 im Bereich der Zwischenstück-Schwenkachse A2 zwischen dem ersten Bereich des Zwischenstück-Schwenklagers L2 und dem zweiten Bereich des Zwischenstück-Schwenklagers L2 befindet.

Gemäß dem gezeigten Beispiel ist vorgesehen, dass das kameraseitige Zwischenstück K2 einen dritten plattenförmigen Fortsatz 53 und einen vierten plattenförmigen Fortsatz 54 aufweist,
- wobei sich der dritte plattenförmige Fortsatz 53 flächig in einer dritten Ebene von dem Rahmen K20 bis zu einem ersten Bereich des kameraseitigen Schwenklagers LK erstreckt, wobei die dritte Ebene zu der kameraseitigen Schwenkachse AK senkrecht ist,
- wobei sich der vierte plattenförmige Fortsatz 54 flächig in einer vierten Ebene von dem Rahmen K20 bis zu einem zweiten Bereich des kameraseitigen Schwenklagers LK erstreckt, wobei die vierte Ebene zu der kameraseitigen Schwenkachse AK senkrecht ist,
- wobei sich der Kabelführungsbereich 39 im Bereich des kameraseitigen Zwischenstücks K2 zwischen der dritten Ebene und der vierten Ebene befindet.

Gemäß dem gezeigten Beispiel ist vorgesehen, dass der Rahmen K20 eine erste Rahmen-Seitenfläche K21 und eine zweite Rahmen-Seitenfläche K22 aufweist,
- wobei der erste Bereich des Zwischenstück-Schwenklagers L2 mittels des ersten plattenförmigen Fortsatzes 51 mit der ersten Rahmen-Seitenfläche K21 verbunden ist,
- wobei der zweite Bereich des Zwischenstück-Schwenklagers L2 mittels des zweiten plattenförmigen Fortsatzes 52 mit der zweiten Rahmen-Seitenfläche K22 verbunden ist,
- wobei die erste Rahmen-Seitenfläche K21 zu der Zwischenstück-Schwenkachse A2 senkrecht ist und eine Kante der ersten Rahmen-Seitenfläche K21 um die Zwischenstück-Schwenkachse A2 kreisbogenförmig gekrümmt ist,
- wobei die zweite Rahmen-Seitenfläche K22 zu der Zwischenstück-Schwenkachse A2 senkrecht ist und eine Kante der zweiten Rahmen-Seitenfläche K22 um die Zwischenstück-Schwenkachse A2 kreisbogenförmig gekrümmt ist.

Gemäß dem gezeigten Beispiel ist vorgesehen, dass der Rahmen K20 eine dritte Rahmen-Seitenfläche K23 und eine vierte Rahmen-Seitenfläche K23 aufweist,
- wobei der erste Bereich des kameraseitigen Schwenklagers LK mittels des dritten plattenförmigen Fortsatzes 53 mit der dritten Rahmen-Seitenfläche K23 verbunden ist,
- wobei der zweite Bereich des kameraseitigen Schwenklagers LK mittels des vierten plattenförmigen Fortsatzes 54 mit der vierten Rahmen-Seitenfläche K24 verbunden ist,
- wobei die dritte Rahmen-Seitenfläche K23 zu der kameraseitigen Schwenkachse AK senkrecht ist und eine Kante der dritten Rahmen-Seitenfläche K23 um die kameraseitige Schwenkachse AK kreisbogenförmig gekrümmt ist,
- wobei die vierte Rahmen-Seitenfläche K24 zu der kameraseitigen Schwenkachse AK senkrecht ist und eine Kante der vierten Rahmen-Seitenfläche K24 um die kameraseitige Schwenkachse AK kreisbogenförmig gekrümmt ist.

Gemäß dem gezeigten Beispiel ist vorgesehen, dass das tragstrukturseitige Zwischenstück T2 eine erste tragstrukturseitige Seitenfläche T21 und eine zweite tragstrukturseitige Seitenfläche T22 aufweist,
- wobei sich der Kabelführungsbereich 39 im Bereich des tragstrukturseitigen Zwischenstücks K2 zwischen der ersten tragstrukturseitigen Seitenfläche T21 und der zweiten tragstrukturseitigen Seitenfläche T22 befindet,
- wobei die erste tragstrukturseitige Seitenfläche T21 zu der Zwischenstück-Schwenkachse A2 senkrecht ist und eine Kante der ersten tragstrukturseitigen Seitenfläche T21 um die Zwischenstück-Schwenkachse A2 kreisbogenförmig gekrümmt ist, wobei die Kante der ersten tragstrukturseitigen Seitenfläche T21 an die Kante der ersten Rahmen-Seitenfläche K21 angrenzt, insbesondere derart angrenzt, dass ein Spalt zwischen der Kante der ersten tragstrukturseitigen Seitenfläche T21 und der Kante der ersten Rahmen-Seitenfläche K21 kreisbogenförmig um die Zwischenstück-Schwenkachse A2 verläuft,
- wobei die zweite tragstrukturseitige Seitenfläche T22 zu der Zwischenstück-Schwenkachse A2 senkrecht ist und eine Kante der zweiten tragstrukturseitigen Seitenfläche T22 um die Zwischenstück-Schwenkachse A2 kreisbogenförmig gekrümmt ist, wobei die Kante der zweiten tragstrukturseitigen Seitenfläche T22 an die Kante der zweiten Rahmen-Seitenfläche K22 angrenzt, insbesondere derart angrenzt, dass ein Spalt zwischen der Kante der zweiten tragstrukturseitigen Seitenfläche T22 und der Kante der zweiten Rahmen-Seitenfläche K22 kreisbogenförmig um die Zwischenstück-Schwenkachse A2 verläuft.

Gemäß dem gezeigten Beispiel ist vorgesehen, dass das kameraseitige Teil K1 eine erste kameraseitige Seitenfläche K11 und eine zweite kameraseitige Seitenfläche K12 aufweist,
- wobei sich der Kabelführungsbereich 39 im Bereich des kameraseitigen Teils K1 zwischen der ersten kameraseitigen Seitenfläche K11 und der zweiten kameraseitigen Seitenfläche K12 befindet,
- wobei die erste kameraseitige Seitenfläche K11 zu der kameraseitigen Schwenkachse AK senkrecht ist und eine Kante der ersten kameraseitigen Seitenfläche K11 um die kameraseitige Schwenkachse AK kreisbogenförmig gekrümmt ist, wobei die Kante der ersten kameraseitigen Seitenfläche K11 an die Kante der dritten Rahmen-Seitenfläche K23 angrenzt, insbesondere derart angrenzt, dass ein Spalt zwischen der Kante der ersten kameraseitigen Seitenfläche K11 und der Kante der dritten Rahmen-Seitenfläche K23 kreisbogenförmig um die kameraseitige Schwenkachse AK verläuft,
- wobei die zweite kameraseitige Seitenfläche K12 zu der kameraseitigen Schwenkachse AK senkrecht ist und eine Kante der zweiten kameraseitigen Seitenfläche K12 um die kameraseitige Schwenkachse AK kreisbogenförmig gekrümmt ist, wobei die Kante der zweiten kameraseitigen Seitenfläche K12 an die Kante der vierten Rahmen-Seitenfläche K24 angrenzt, insbesondere derart angrenzt, dass ein Spalt zwischen der Kante der zweiten kameraseitigen Seitenfläche K12 und der Kante der vierten Rahmen-Seitenfläche K24 kreisbogenförmig um die kameraseitige Schwenkachse AK verläuft.

Gemäß dem gezeigten Beispiel ist vorgesehen, dass die Haltevorrichtung 3 ein tragstrukturseitiges Teil T1, ein tragstrukturseitiges Schwenklager LT und eine tragstrukturseitige Arretierung BT aufweist,
- wobei das tragstrukturseitige Zwischenstück T2 relativ zu dem tragstrukturseitigen Teil T1 mittels des tragstrukturseitigen Schwenklagers LT um eine tragstrukturseitige Schwenkachse AT schwenkbar gelagert ist, wenn die tragstrukturseitige Arretierung BT gelöst ist,
- wobei sich der Kabelführungsbereich 39 durch das tragstrukturseitige Teil T1 hindurch bis zu dem tragstrukturseitigen Zwischenstück T2 entlang der Längslinie des Kabelführungsbereichs 39 erstreckt,
- wobei ein durch das tragstrukturseitige Teil T1 verlaufender Abschnitt der Längslinie des Kabelführungsbereichs 39 im Wesentlichen parallel zu der tragstrukturseitigen Schwenkachse AT ist,
- wobei das tragstrukturseitige Schwenklager LT und die tragstrukturseitige Arretierung BT außerhalb des Kabelführungsbereichs 39 angeordnet sind.

Die tragstrukturseitige Schwenkachse AT ist senkrecht zu der Zwischenstück-Schwenkachse A2. Die tragstrukturseitige Schwenkachse AT und die Zwischenstück-Schwenkachse A2 sind entlang eines durch das tragstrukturseitige Zwischenstück T2 verlaufenden Abschnitts der Längslinie des Kabelführungsbereichs 39 voneinander beabstandet. Das tragstrukturseitige Teil T1 ist zylinderförmig, wobei eine Zylinderachse des tragstrukturseitigen Teils T1 die tragstrukturseitige Schwenkachse AT bildet.

Gemäß dem gezeigten Beispiel ist vorgesehen, dass die Haltevorrichtung 3 ein Netzteil 41 und ein Netzkabel C1 zur elektrischen Energieversorgung der Kamera K aufweist, wobei das Netzteil 41 im Inneren des tragstrukturseitigen Teils T1 angeordnet ist, wobei das Netzkabel C1 innerhalb des Kabelführungsbereichs 39 von dem Netzteil 41 bis hinein in das kameraseitige Teil K1 verläuft.

Gemäß dem gezeigten Beispiel ist vorgesehen, dass die tragstrukturseitige Arretierung BT einen ersten Spannkeil 71 aufweist, wobei ein Spannen der tragstrukturseitigen Arretierung BT ein Drücken des ersten Spannkeils 71 gegen eine Mantelfläche des tragstrukturseitigen Teils T1 derart bewirkt, dass eine reibschlüssige Fixierung des tragstrukturseitigen Zwischenstücks T2 relativ zu dem tragstrukturseitigen Teil T1 erfolgt.

Gemäß dem gezeigten Beispiel ist vorgesehen, dass das tragstrukturseitige Zwischenstück T2 eine erste Verbindungseinheit 78 aufweist,
- wobei das tragstrukturseitige Teil T1 eine zweite Verbindungseinheit 79 aufweist, die zu der ersten Verbindungseinheit 78 derart korrespondierend ausgebildet ist, dass mittels der ersten Verbindungseinheit 78 und der zweiten Verbindungseinheit 79 eine Verbindung hergestellt werden kann, welche einer Translation des tragstrukturseitigen Zwischenstücks T2 relativ zu dem tragstrukturseitigen Teil T1, die zu der tragstrukturseitigen Schwenkachse AT parallel ist, formschlüssig entgegenwirkt, wenn die tragstrukturseitige Arretierung BT gelöst ist,
- wobei das tragstrukturseitige Zwischenstück T2 relativ zu dem tragstrukturseitigen Teil T1 mittels des tragstrukturseitigen Schwenklagers LT um die tragstrukturseitige Schwenkachse AT schwenkbar gelagert ist, wenn die tragstrukturseitige Arretierung BT gelöst ist und die Verbindung mittels der ersten Verbindungseinheit 78 und der zweiten Verbindungseinheit 79 hergestellt ist.

Die Haltevorrichtung 3 weist das Verkleidungsteil F auf, welches lösbar mit dem tragstrukturseitigen Zwischenstück T2 verbunden ist. Die Haltevorrichtung 3 weist ferner das Datenkabel C2, das Erdungskabel C3. Das Zwischenstück-Schwenklager L2 ist mittels der Schraubverbindung 75 mit dem tragstrukturseitigen Zwischenstück T2 verbunden. Das Zwischenstück-Schwenklager L2 und das kameraseitige Schwenklager LK bilden in Verbindung mit dem kameraseitigen Zwischenstück K2 ein hohles Kreuzgelenk. Die Kamera 3 ist eine 3D-Kamera mit dem Objektiv 36 und den konvektiven Kühlkörper 38 auf. Das Koordinatensystem M zeigt die Richtungen im Raum an.

Das kameraseitige Teil V1 weist eine kameraseitige Verkleidung V1 auf. Die kameraseitige Verkleidung V1 weist die zweite kameraseitige Seitenfläche K12 auf.

Dabei ist das Verkleidungsteil F entfernt, sodass die Schrauben 73 und 74 der tragstrukturseitigen Arretierung BT und die Schrauben der Zwischenstück-Arretierung B2 zum Lösen und/oder Spannen zugänglich sind. Das tragstrukturseitige Teil T1 ist ein Hohlrohr. Die Tragstruktur-Schnittstelle TD ist eine Schraubzwinge, die beispielsweise an der Decke D befestigt ist.

Die tragstrukturseitige Arretierung BT weist einen zweiten Spannkeil 72 auf, wobei ein Spannen der tragstrukturseitigen Arretierung BT ein Drücken des zweiten Spannkeils 72 gegen eine Mantelfläche des tragstrukturseitigen Teils T1 derart bewirkt, dass eine reibschlüssige Fixierung des tragstrukturseitigen Zwischenstücks T2 relativ zu dem tragstrukturseitigen Teil T1 erfolgt.

Die erste Verbindungseinheit 78 kann beispielsweise ein federndes Druckstück sein. Die zweite Verbindungseinheit 79 kann beispielsweise ein Schlitz sein, in den ein federnd gelagerter Körper des Druckstücks mittels einer Feder des Druckstücks hineingedrückt wird.

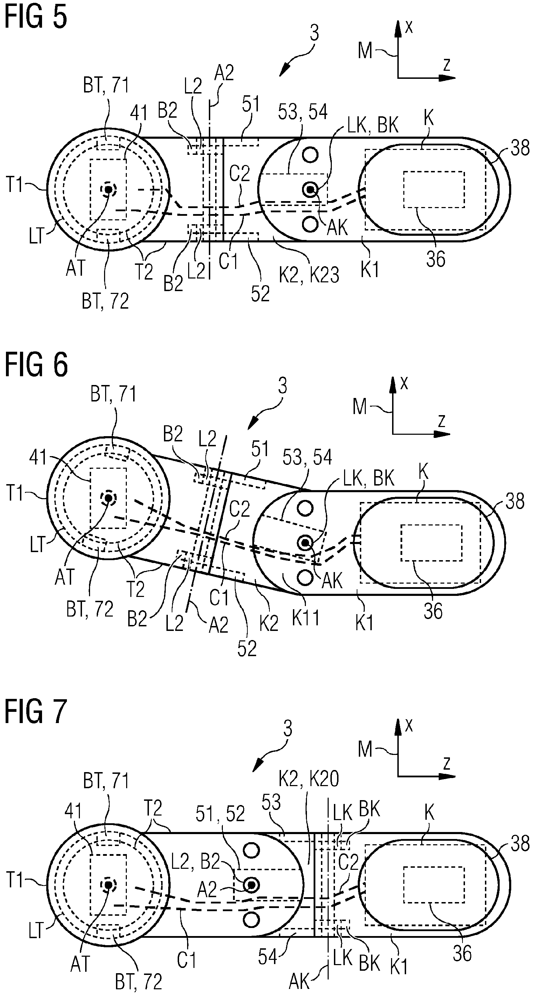

Um von der in der Fig. 5 gezeigten Ausrichtung zu der in der Fig. 6 gezeigten Ausrichtung zu gelangen, wurden eine Schwenkbewegung des kameraseitigen Teils K1 relativ zu dem kameraseitigen Zwischenstück K2 um die kameraseitige Schwenkachse AK und eine Schwenkbewegung des tragstrukturseitigen Zwischenstücks T2 relativ zu dem tragstrukturseitigen Teil T1 um die tragstrukturseitige Schwenkachse AT derart kombiniert, dass sich eine reine Translation des kameraseitigen Teils K1 im Raum ergibt und dass die Positionsänderung des kameraseitigen Teils K1 keine rotatorische Komponente hat.

Die Fig. 7 zeigt die Haltevorrichtung 3 gemäß einem zweiten Beispiel, wobei die tragstrukturseitige Schwenkachse AT parallel zu der Zwischenstück-Schwenkachse A2 ist.

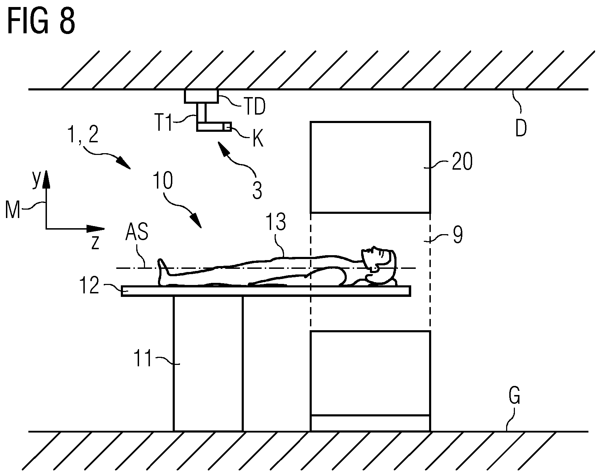

Die Fig. 8 zeigt das System 1, aufweisend das medizinisches Bildgebungsgerät 2, die Kamera K und die Haltevorrichtung 3 zum Halten der Kamera K, wobei die Kamera K in das kameraseitige Teil K1 der Haltevorrichtung 3 aufgenommen ist. Das medizinische Bildgebungsgerät 2 weist die Gantry 20, die tunnelförmige Öffnung 9 und die Patientenliege 10 auf. In die tunnelförmige Öffnung 9 ist der Patient 13 einführbar. In der tunnelförmigen Öffnung 9 befindet sich der Akquisitionsbereich. Die Patientenliege 10 weist den Lagerungssockel 11 und die Lagerungsplatte 12 zur Lagerung des Patienten 13 auf. Die Lagerungsplatte 12 ist durch eine Translationsbewegung der Patientenliege 10 und der Gantry 20 relativ zueinander in einer Längsrichtung der Lagerungsplatte 12, insbesondere entlang der Systemachse AS, in die tunnelförmige Öffnung 9 einführbar. Der Untersuchungsraum weist die Decke D und den Boden G auf. Die Haltevorrichtung 3 ist mittels der Tragstruktur-Schnittstelle TD an der Decke D befestigt.

## Patentansprüche

1. Haltevorrichtung (3) zum Halten einer Kamera (K),
- wobei die Haltevorrichtung (3) ein kameraseitiges Teil (K1), ein kameraseitiges Schwenklager (LK), eine kameraseitige Arretierung (BK), ein kameraseitiges Zwischenstück (K2), ein tragstrukturseitiges Zwischenstück (T2), ein Zwischenstück-Schwenklager (L2), eine Zwischenstück-Arretierung (B2) und einen Kabelführungsbereich (39) aufweist,
- wobei das kameraseitige Teil (K1) zur Aufnahme der Kamera (K) eingerichtet ist und relativ zu dem kameraseitigen Zwischenstück (K2) mittels des kameraseitigen Schwenklagers (LK) um eine kameraseitige Schwenkachse (AK) schwenkbar gelagert ist, wenn die kameraseitige Arretierung (BK) gelöst ist,
- wobei das kameraseitige Zwischenstück (K2) relativ zu dem tragstrukturseitigen Zwischenstück (T2) mittels des Zwischenstück-Schwenklagers (L2) um eine Zwischenstück-Schwenkachse (A2) schwenkbar gelagert ist, wenn die Zwischenstück-Arretierung (B2) gelöst ist,
- wobei sich der Kabelführungsbereich (39) entlang einer Längslinie des Kabelführungsbereichs (39) durch das tragstrukturseitige Zwischenstück (T2) und das kameraseitige Zwischenstück (K2) hindurch bis hinein in das kameraseitige Teil (K1) erstreckt,
- wobei die Längslinie des Kabelführungsbereichs (39) im Bereich der Zwischenstück-Schwenkachse (A2) im Wesentlichen senkrecht zu der Zwischenstück-Schwenkachse (A2) verläuft,
- wobei das Zwischenstück-Schwenklager (L2) und die Zwischenstück-Arretierung (B2) außerhalb des Kabelführungsbereichs (39) angeordnet sind,
- wobei die Haltevorrichtung (3) ein tragstrukturseitiges Teil (T1), ein tragstrukturseitiges Schwenklager (LT) und eine tragstrukturseitige Arretierung (BT) aufweist,
- wobei das tragstrukturseitige Zwischenstück (T2) relativ zu dem tragstrukturseitigen Teil (T1) mittels des tragstrukturseitigen Schwenklagers (LT) um eine tragstrukturseitige Schwenkachse (AT) schwenkbar gelagert ist, wenn die tragstrukturseitige Arretierung (BT) gelöst ist,
- wobei sich der Kabelführungsbereich (39) durch das tragstrukturseitige Teil (T1) hindurch bis zu dem tragstrukturseitigen Zwischenstück (T2) entlang der Längslinie des Kabelführungsbereichs (39) erstreckt,
- wobei ein durch das tragstrukturseitige Teil (T1) verlaufender Abschnitt der Längslinie des Kabelführungsbereichs (39) im Wesentlichen parallel zu der tragstrukturseitigen Schwenkachse (AT) ist,
- wobei das tragstrukturseitige Schwenklager (LT) und die tragstrukturseitige Arretierung (BT) außerhalb des Kabelführungsbereichs (39) angeordnet sind,
- wobei das tragstrukturseitige Teil (T1) zylinderförmig ist,
- wobei eine Zylinderachse des tragstrukturseitigen Teils (T1) die tragstrukturseitige Schwenkachse (AT) bildet,
- **dadurch gekennzeichnet, dass** die tragstrukturseitige Arretierung (BT) einen ersten Spannkeil (71) aufweist, wobei ein Spannen der tragstrukturseitigen Arretierung (BT) ein Drücken des ersten Spannkeils (71) gegen eine Mantelfläche des tragstrukturseitigen Teils (T1) derart bewirkt, dass eine reibschlüssige Fixierung des tragstrukturseitigen Zwischenstücks (T2) relativ zu dem tragstrukturseitigen Teil (T1) erfolgt.

2. Haltevorrichtung (3) nach Anspruch 1,
- wobei die kameraseitige Schwenkachse (AK) senkrecht zu der Zwischenstück-Schwenkachse (A2) ist.

3. Haltevorrichtung (3) nach Anspruch 1 oder 2,
- wobei die kameraseitige Schwenkachse (AK) und die Zwischenstück-Schwenkachse (A2) entlang eines durch das kameraseitige Zwischenstück (K2) verlaufenden Abschnitts der Längslinie des Kabelführungsbereichs (39) voneinander beabstandet sind.

4. Haltevorrichtung (3) nach einem der Ansprüche 1 bis 3,
- wobei das kameraseitige Zwischenstück (K2) einen Rahmen (K20), einen ersten plattenförmigen Fortsatz (51) und einen zweiten plattenförmigen Fortsatz (52) aufweist,
- wobei sich der Kabelführungsbereich (39) durch den Rahmen (K20) hindurch erstreckt,
- wobei sich der erste plattenförmige Fortsatz (51) flächig in einer ersten Ebene von dem Rahmen (K20) bis zu einem ersten Bereich des Zwischenstück-Schwenklagers (L2) erstreckt, wobei die erste Ebene zu der Zwischenstück-Schwenkachse (A2) senkrecht ist,
- wobei sich der zweite plattenförmige Fortsatz (52) flächig in einer zweiten Ebene von dem Rahmen (K20) bis zu einem zweiten Bereich des Zwischenstück-Schwenklagers (L2) erstreckt, wobei die zweite Ebene zu der Zwischenstück-Schwenkachse (A2) senkrecht ist,
- wobei sich der Kabelführungsbereich (39) im Bereich des kameraseitigen Zwischenstücks (K2) zwischen der ersten Ebene und der zweiten Ebene befindet.

5. Haltevorrichtung (3) nach Anspruch 4,
- wobei der Rahmen (K20) eine erste Rahmen-Seitenfläche (K21) und eine zweite Rahmen-Seitenfläche (K22) aufweist,
- wobei der erste Bereich des Zwischenstück-Schwenklagers (L2) mittels des ersten plattenförmigen Fortsatzes (51) mit der ersten Rahmen-Seitenfläche (K21) verbunden ist,
- wobei der zweite Bereich des Zwischenstück-Schwenklagers (L2) mittels des zweiten plattenförmigen Fortsatzes (52) mit der zweiten Rahmen-Seitenfläche (K22) verbunden ist,
- wobei die erste Rahmen-Seitenfläche (K21) zu der Zwischenstück-Schwenkachse (A2) senkrecht ist und eine Kante der ersten Rahmen-Seitenfläche (K21) um die Zwischenstück-Schwenkachse (A2) kreisbogenförmig gekrümmt ist,
- wobei die zweite Rahmen-Seitenfläche (K22) zu der Zwischenstück-Schwenkachse (A2) senkrecht ist und eine Kante der zweiten Rahmen-Seitenfläche (K22) um die Zwischenstück-Schwenkachse (A2) kreisbogenförmig gekrümmt ist.

6. Haltevorrichtung (3) nach Anspruch 5,
- wobei das tragstrukturseitige Zwischenstück (T2) eine erste tragstrukturseitige Seitenfläche (T21) und eine zweite tragstrukturseitige Seitenfläche (T22) aufweist,
- wobei sich der Kabelführungsbereich (39) im Bereich des tragstrukturseitigen Zwischenstücks (K2) zwischen der ersten tragstrukturseitigen Seitenfläche (T21) und der zweiten tragstrukturseitigen Seitenfläche (T22) befindet,
- wobei die erste tragstrukturseitige Seitenfläche (T21) zu der Zwischenstück-Schwenkachse (A2) senkrecht ist und eine Kante der ersten tragstrukturseitigen Seitenfläche (T21) um die Zwischenstück-Schwenkachse (A2) kreisbogenförmig gekrümmt ist, wobei die Kante der ersten tragstrukturseitigen Seitenfläche (T21) an die Kante der ersten Rahmen-Seitenfläche (K21) angrenzt,
- wobei die zweite tragstrukturseitige Seitenfläche (T22) zu der Zwischenstück-Schwenkachse (A2) senkrecht ist und eine Kante der zweiten tragstrukturseitigen Seitenfläche (T22) um die Zwischenstück-Schwenkachse (A2) kreisbogenförmig gekrümmt ist, wobei die Kante der zweiten tragstrukturseitigen Seitenfläche (T22) an die Kante der zweiten Rahmen-Seitenfläche (K22) angrenzt.

7. Haltevorrichtung (3) nach einem der Ansprüche 1 bis 6,
- wobei die tragstrukturseitige Schwenkachse (AT) senkrecht zu der Zwischenstück-Schwenkachse (A2) ist.

8. Haltevorrichtung (3) nach einem der Ansprüche 1 bis 7,
- wobei die tragstrukturseitige Schwenkachse (AT) und die Zwischenstück-Schwenkachse (A2) entlang eines durch das tragstrukturseitige Zwischenstück (T2) verlaufenden Abschnitts der Längslinie des Kabelführungsbereichs (39) voneinander beabstandet sind.

9. Haltevorrichtung (3) nach einem der Ansprüche 1 bis 8,
- wobei die Haltevorrichtung (3) ein Netzteil (41) und ein Netzkabel (C1) zur elektrischen Energieversorgung der Kamera (K) aufweist,
- wobei das Netzteil (41) im Inneren des tragstrukturseitigen Teils (T1) angeordnet ist,
- wobei das Netzkabel (C1) innerhalb des Kabelführungsbereichs (39) von dem Netzteil (41) bis hinein in das kameraseitige Teil (K1) verläuft.

10. System (1), aufweisend ein medizinisches Bildgebungsgerät (2), eine Kamera (K) und eine Haltevorrichtung (3) nach einem der Ansprüche 1 bis 9 zum Halten der Kamera (K), wobei die Kamera (K) in das kameraseitige Teil (K1) der Haltevorrichtung (3) aufgenommen ist.

11. Verfahren zum Ausrichten einer Kamera (K), wobei die Kamera (K) in das kameraseitige Teil (K1) einer Haltevorrichtung (3) nach einem der Ansprüche 1 bis 9 aufgenommen ist,
- wobei die kameraseitige Arretierung (BK) gelöst wird, das kameraseitige Teil (K1) relativ zu dem kameraseitigen Zwischenstück (K2) um die kameraseitige Schwenkachse (AK) geschwenkt wird und die kameraseitige Arretierung (BK) gespannt wird,
- wobei die Zwischenstück-Arretierung (B2) gelöst wird, das kameraseitige Zwischenstück (K2) relativ zu dem tragstrukturseitigen Zwischenstück (T2) um die Zwischenstück-Schwenkachse (A2) geschwenkt wird und die Zwischenstück-Arretierung (B2) gespannt wird,
- wobei durch das Spannen der tragstrukturseitigen Arretierung (BT) das Drücken des ersten Spannkeils (71) gegen die Mantelfläche des tragstrukturseitigen Teils (T1) derart bewirkt wird, dass die reibschlüssige Fixierung des tragstrukturseitigen Zwischenstücks (T2) relativ zu dem tragstrukturseitigen Teil (T1) erfolgt.

12. Verfahren nach Anspruch 11,
- wobei die tragstrukturseitige Arretierung (BT) gelöst wird, das tragstrukturseitige Zwischenstück (T2) relativ zu dem tragstrukturseitigen Teil (T1) um die tragstrukturseitige Schwenkachse (AT) geschwenkt wird und die kameraseitige Arretierung (BK) gespannt wird.

## Claims

1. Mounting device (3) for mounting a camera (K),
- wherein the mounting device (3) has a camera-end part (K1), a camera-end swivel bearing (LK), a camera-end locking mechanism (BK), a camera-end adapter (K2), a support structure-end adapter (T2), an adapter swivel bearing (L2), an adapter locking mechanism (B2) and a cable routing region (39),
- wherein the camera-end part (K1) is set up to receive the camera (K) and is mounted swivelably relative to the camera-end adapter (K2) around a camera-end swivel axis (AK) by way of the camera-end swivel bearing (LK) when the camera-end locking mechanism (BK) is undone,
- wherein the camera-end adapter (K2) is mounted swivelably relative to the support structure-end adapter (T2) around an adapter swivel axis (A2) by way of the adapter swivel bearing (L2) when the adapter locking mechanism (B2) is undone,
- wherein the cable routing region (39) extends along a longitudinal line of the cable routing region (39) through the support structure-end adapter (T2) and the camera-end adapter (K2) into the camera-end part (K1),
- wherein the longitudinal line of the cable routing region (39) runs substantially perpendicularly to the adapter swivel axis (A2) in the region of the adapter swivel axis (A2),
- wherein the adapter swivel bearing (L2) and the adapter locking mechanism (B2) are arranged outside the cable routing region (39),
- wherein the mounting device (3) has a support structure-end part (T1), a support structure-end swivel bearing (LT) and a support structure-end locking mechanism (BT),
- wherein the support structure-end adapter (T2) is mounted swivelably relative to the support structure-end part (T1) around a support structure-end swivel axis (AT) by way of the support structure-end swivel bearing (LT) when the support structure-end locking mechanism (BT) is undone,
- wherein the cable routing region (39) extends along the longitudinal line of the cable routing region (39) through the support structure-end part (T1) up to the support structure-end adapter (T2),
- wherein a portion of the longitudinal line of the cable routing region (39) running through the support structure-end part (T1) is substantially parallel to the support structure-end swivel axis (AT),
- wherein the support structure-end swivel bearing (LT) and the support structure-end locking mechanism (BT) are arranged outside the cable routing region (39),
- wherein the support structure-end part (T1) is cylindrical,
- wherein a cylinder axis of the support structure-end part (T1) forms the support structure-end swivel axis (AT)
- **characterised in that** the support structure-end locking mechanism (BT) has a first clamping wedge (71), wherein tightening of the support structure-end locking mechanism (BT) presses the first clamping wedge (71) against a circumferential surface of the support structure-end part (T1) in such a way that the support structure-end adapter (T2) is frictionally immobilised relative to the support structure-end part (T1).

2. Mounting device (3) according to claim 1,
- wherein the camera-end swivel axis (AK) is perpendicular to the adapter swivel axis (A2).

3. Mounting device (3) according to claim 1 or claim 2,
- wherein the camera-end swivel axis (AK) and the adapter swivel axis (A2) are spaced apart from one another along a portion of the longitudinal line of the cable routing region (39) running through the camera-end adapter (K2).

4. Mounting device (3) according to one of claims 1 to 3,
- wherein the camera-end adapter (K2) has a frame (K20), a first plate-shaped projection (51) and a second plate-shaped projection (52),
- wherein the cable routing region (39) extends through the frame (K20),
- wherein the first plate-shaped projection (51) extends flat in a first plane from the frame (K20) up to a first region of the adapter swivel bearing (L2), wherein the first plane is perpendicular to the adapter swivel axis (A2),
- wherein the second plate-shaped projection (52) extends flat in a second plane from the frame (K20) up to a second region of the adapter swivel bearing (L2), wherein the second plane is perpendicular to the adapter swivel axis (A2),
- wherein the cable routing region (39) is located in the region of the camera-end adapter (K2) between the first plane and the second plane.

5. Mounting device (3) according to claim 4,
- wherein the frame (K20) has a first frame side face (K21) and a second frame side face (K22),
- wherein the first region of the adapter swivel bearing (L2) is connected to the first frame side face (K21) by way of the first plate-shaped projection (51),
- wherein the second region of the adapter swivel bearing (L2) is connected to the second frame side face (K22) by way of the second plate-shaped projection (52),
- wherein the first frame side face (K21) is perpendicular to the adapter swivel axis (A2) and one edge of the first frame side face (K21) is curved in a circular arc shape around the adapter swivel axis (A2),
- wherein the second frame side face (K22) is perpendicular to the adapter swivel axis (A2) and one edge of the second frame side face (K22) is curved in a circular arc shape around the adapter swivel axis (A2).

6. Mounting device (3) according to claim 5,
- wherein the support structure-end adapter (T2) has a first support structure-end side face (T21) and a second support structure-end side face (T22),
- wherein the cable routing region (39) is located in the region of the support structure-end adapter (K2) between the first support structure-end side face (T21) and the second support structure-end side face (T22),
- wherein the first support structure-end side face (T21) is perpendicular to the adapter swivel axis (A2) and one edge of the first support structure-end side face (T21) is curved in a circular arc shape around the adapter swivel axis (A2), wherein the edge of the first support structure-end side face (T21) abuts the edge of the first frame side face (K21),
- wherein the second support structure-end side face (T22) is perpendicular to the adapter swivel axis (A2) and one edge of the second support structure-end side face (T22) is curved in a circular arc shape around the adapter swivel axis (A2), wherein the edge of the second support structure-end side face (T22) abuts the edge of the second frame side face (K22).

7. Mounting device (3) according to one of claims 1 to 6,
- wherein the support structure-end swivel axis (AT) is perpendicular to the adapter swivel axis (A2).

8. Mounting device (3) according to one of claims 1 to 7,
- wherein the support structure-end swivel axis (AT) and the adapter swivel axis (A2) are spaced apart from one another along a portion of the longitudinal line of the cable routing region (39) running through the support structure-end adapter (T2).

9. Mounting device (3) according to one of claims 1 to 8,
- wherein the mounting device (3) has a power supply unit (41) and a power cable (C1) for supplying the camera (K) with electrical power,
- wherein the power supply unit (41) is arranged in the interior of the support structure-end part (T1),
- wherein the power cable (C1) runs within the cable routing region (39) from the power supply unit (41) into the camera-end part (K1).

10. System (1) including a medical imaging device (2), a camera (K), and a mounting device (3) according to one of claims 1 to 9 for mounting the camera (K), wherein the camera (K) is received in the camera-end part (K1) of the mounting device (3).

11. Method for orienting a camera (K), wherein the camera (K) is received in the camera-end part (K1) of a mounting device (3) according to one of claims 1 to 9,
- wherein the camera-end locking mechanism (BK) is undone, the camera-end part (K1) is swivelled relative to the camera-end adapter (K2) around the camera-end swivel axis (AK) and the camera-end locking mechanism (BK) is tightened,
- wherein the adapter locking mechanism (B2) is undone, the camera-end adapter (K2) is swivelled relative to the support structure-end adapter (T2) around the adapter swivel axis (A2) and the adapter locking mechanism (B2) is tightened,
- wherein, by way of tightening the support structure-end locking mechanism (BT), the first clamping wedge (71) is pressed against the circumferential surface of the support structure-end part (T1) in such a way that the support structure-end adapter (T2) is frictionally immobilised relative to the support structure-end part (T1).

12. Method according to claim 11,
- wherein the support structure-end locking mechanism (BT) is undone, the support structure-end adapter (T2) is swivelled relative to the support structure-end part (T1) around the support structure-end swivel axis (AT) and the camera-end locking mechanism (BK) is tightened.

## Revendications

1. Dispositif (3) de retenue pour maintenir une caméra (K),
- dans lequel le dispositif (3) de retenue a une partie (K1) du côté de la caméra, un palier (LK) pivotant du côté de la caméra, un dispositif (BK) d'arrêt du côté de la caméra, une pièce (K2) intermédiaire du côté de la caméra, une pièce (T2) intermédiaire du côté d'une structure de support, un palier (L2) pivotant de pièce intermédiaire, un dispositif (B2) d'arrêt de pièce intermédiaire et une partie (39) de guidage de câble,
- dans lequel la partie (K1) du côté de la caméra est agencée pour recevoir la caméra (K) et est montée pivotante autour d'un axe (AK) de pivotement du côté de la caméra par rapport à la pièce (K2) intermédiaire du côté de la caméra, au moyen du palier (LK) pivotant du côté de la caméra, si le dispositif (BK) d'arrêt du côté de la caméra est débloqué,
- dans lequel la pièce (K2) intermédiaire du côté de la caméra est montée pivotante autour d'un axe (A2) de pivotement de la pièce intermédiaire par rapport à la pièce (T2) intermédiaire du côté de la structure de support, au moyen du palier (L2) pivotant de pièce intermédiaire, si le dispositif (B2) d'arrêt de pièce intermédiaire est débloqué,
- dans lequel la partie (39) de guidage de câble passe, le long d'une ligne longitudinale de la partie (39) de guidage de câble, jusqu'à l'intérieur, dans la partie (K1) du côté de la caméra, en passant à travers la pièce (T2) intermédiaire du côté de la structure de support et la pièce (K2) intermédiaire du côté de la caméra,
- dans lequel la ligne longitudinale de la partie (39) de guidage de câble s'étend dans la partie de l'axe (A2) de pivotement de la pièce intermédiaire sensiblement perpendiculairement à l'axe (A2) de pivotement de la pièce intermédiaire,
- dans lequel le palier (L2) de pivotement de pièce intermédiaire et le dispositif (B2) d'arrêt de pièce intermédiaire sont disposés à l'extérieur de la partie (39) de guidage de câble,
- dans lequel le dispositif (3) de retenue a une partie (T1) du côté de la structure de support, un palier (LT) pivotant du côté de la structure de support et un dispositif (BT) d'arrêt du côté de la structure de support,
- dans lequel la pièce (T2) intermédiaire du côté de la structure de support est montée pivotante autour d'un axe (AT) de pivotement du côté de la structure de support par rapport à la partie (T1) du côté de la structure de support, au moyen du palier (LT) pivotant du côté de la structure de support, si le dispositif (BT) d'arrêt du côté de la structure de support est débloqué,
- dans lequel la partie (39) de guidage de câble s'étend suivant la ligne longitudinale de la partie (39) de guidage de câble, en passant à travers la partie (T1) du côté de la structure de support, jusqu'à la pièce (T2) intermédiaire du côté de la structure de support,
- dans lequel un segment, passant dans la partie (T1) du côté de la structure de support, de la ligne longitudinale de la partie (39) de guidage de câble, est sensiblement parallèle à l'axe (AT) de pivotement du côté de la structure de support,
- dans lequel le palier (LT) pivotant du côté de la structure de support et le dispositif (BT) d'arrêt du côté de la structure de support sont disposés à l'extérieur de la partie (39) de guidage de câble,
- dans lequel la partie (T1) de structure de support est d'une forme cylindrique,
- dans lequel un axe du cylindre de la partie (T1) du côté de la structure de support forme l'axe (AT) de pivotement du côté de la structure de support,
- **caractérisé en ce que** le dispositif (BT) d'arrêt du côté de la structure de support a un premier coin (71) de blocage, dans lequel un blocage du dispositif (BT) de blocage du côté de la structure de support provoque une poussée du premier coin (71) de blocage sur une surface latérale de la partie (T1) du côté de la structure de support, de manière à produire une fixation par frottement de la pièce (T2) intermédiaire du côté de la structure support par rapport à la pièce (T1) du côté de la structure de support.

2. Dispositif (3) de retenue suivant la revendication 1,
- dans lequel l'axe (AK) de pivotement du côté de la caméra est perpendiculaire à l'axe (A2) de pivotement de la pièce intermédiaire.

3. Dispositif (3) de retenue suivant la revendication 1 ou 2,
- dans lequel l'axe (AK) de pivotement du côté de la caméra et l'axe (A2) de pivotement de la pièce intermédiaire sont à distance l'un de l'autre suivant un tronçon, passant dans la pièce (K2) intermédiaire du côté de la caméra, de la ligne longitudinale de la partie (39) de guidage de câble.

4. Dispositif (3) de retenue suivant l'une des revendications 1 à 3,
- dans lequel la pièce (K2) intermédiaire du côté de la caméra a un cadre (K20), un premier prolongement (51) en forme de plaque et un deuxième prolongement (52) en forme de plaque,
- dans lequel la partie (39) de guidage de câble passe à travers le cadre (K20),
- dans lequel le premier prolongement (51) en forme de plaque s'étend en surface dans un premier plan du cadre (K20) jusqu'à une première partie du palier (L2) pivotant de la pièce intermédiaire, dans lequel le premier plan est perpendiculaire à l'axe (A2) de pivotement de la pièce intermédiaire,
- dans lequel le deuxième prolongement (52) en forme de plaque s'étend en surface dans un deuxième plan du cadre (K20) jusqu'à une deuxième partie du palier (L2) de pivotement de la pièce intermédiaire, le deuxième plan étant perpendiculaire à l'axe (A2) de pivotement de la pièce intermédiaire,
- dans lequel la partie (39) de guidage de câble se trouve entre le premier plan et le deuxième plan dans la partie de la pièce (K2) intermédiaire du côté de la caméra.

5. Dispositif (3) de retenue suivant la revendication 4,
- dans lequel le cadre (K20) a une première surface (K21) latérale de cadre et une deuxième surface (K22) latérale de cadre,
- dans lequel la première partie du palier (L2) de pivotement de la pièce intermédiaire est, au moyen du premier prolongement (51) en forme de plaque, assemblée à la première surface (K21) latérale du cadre,
- dans lequel la deuxième partie du palier (L2) de pivotement de la pièce intermédiaire est, au moyen du deuxième prolongement (52) en forme de plaque, assemblée à la deuxième surface (K22) latérale du cadre,
- dans lequel la première surface (K21) latérale du cadre est perpendiculaire à l'axe (A2) de pivotement de la pièce intermédiaire et un bord de la première surface (K21) latérale du cadre est incurvé en forme d'arc de cercle autour de l'axe (A2) de pivotement de la pièce intermédiaire,
- dans lequel la deuxième surface (K22) latérale du cadre est perpendiculaire à l'axe (A2) de pivotement de la pièce intermédiaire et un bord de la deuxième surface (K22) latérale du cadre est incurvé en forme d'arc de cercle autour de l'axe (A2) de pivotement de la pièce intermédiaire.

6. Dispositif (3) de retenue suivant la revendication 5,
- dans lequel la pièce (T2) intermédiaire du côté de la structure de support a une première surface (T21) latérale du côté de la structure de support et une deuxième surface (T22) latérale du côté de la structure de support,
- dans lequel la partie (39) de guidage de câble se trouve dans la partie de la pièce (K2) intermédiaire du côté de la structure de support entre la première surface (T21) latérale du côté de la structure de support et la deuxième surface (T22) latérale du côté de la structure de support,
- dans lequel la première surface (T21) latérale du côté de la structure de support est perpendiculaire à l'axe (A2) de pivotement de la pièce intermédiaire et un bord de la première surface (T21) latérale du côté de la structure de support est incurvé en forme d'arc de cercle autour de l'axe (A2) de pivotement de la pièce intermédiaire, le bord de la première surface (T21) latérale du côté de la structure de support étant contigu au bord de la première surface (K21) latérale du cadre,
- dans lequel la deuxième surface (T22) latérale du côté de la structure de support est perpendiculaire à l'axe (A2) de pivotement de la pièce intermédiaire et un bord de la deuxième surface (T22) latérale du côté de la structure de support est incurvé en forme d'arc de cercle autour de l'axe (A2) de pivotement de la pièce intermédiaire, le bord de la deuxième surface (T22) latérale du côté de la structure de support étant contigu au bord de la deuxième surface (K22) latérale du cadre.

7. Dispositif (3) de retenue suivant l'une des revendications 1 à 6,
- dans lequel l'axe (AT) de pivotement du côté de la structure de support est perpendiculaire à l'axe (A2) de pivotement de la pièce intermédiaire.

8. Dispositif (3) de retenue suivant l'une des revendications 1 à 7,
- dans lequel l'axe (AT) de pivotement du côté de la structure de support et l'axe (A2) de pivotement de la pièce intermédiaire sont à distance l'un de l'autre le long d'un segment, passant dans la pièce (T2) intermédiaire du côté de la structure de support, de la ligne longitudinale de la partie (39) de guidage de câble.

9. Dispositif (3) de retenue suivant l'une des revendications 1 à 8,
- dans lequel le dispositif (3) de retenue a une partie (41) de réseau et un câble (C1) de réseau pour l'alimentation de la caméra (K) en énergie électrique,
- dans lequel la partie (41) de réseau est disposée à l'intérieur de la partie (T1) du côté de la structure de support,
- dans lequel le câble (C1) de réseau s'étend, à l'intérieur de la partie (39) de guidage de câble, de la partie (41) de réseau jusqu'à l'intérieur de la partie (K1) du côté de la caméra.

10. Système (1) comportant un appareil (2) d'imagerie médicale, une caméra (K) et un dispositif (3) de retenue suivant l'une des revendications 1 à 9 pour le maintien de la caméra (K), dans lequel la caméra (K) est reçue dans la partie (K1) du côté de la caméra du dispositif (3) de retenue.

11. Procédé d'orientation d'une caméra (K), dans lequel la caméra (K) est reçue dans la partie (K1) du côté de la caméra d'un dispositif (3) de retenue suivant l'une des revendications 1 à 9,
- dans lequel on débloque le dispositif (BK) d'arrêt du côté de la caméra, on fait pivoter, autour de l'axe (AK) de pivotement du côté de la caméra, la partie (K1) du côté de la caméra par rapport à la pièce (K2) intermédiaire du côté de la caméra et on bloque le dispositif (BK) d'arrêt du côté de la caméra,
- dans lequel on débloque le dispositif (B2) d'arrêt de la pièce intermédiaire, on fait pivoter, autour de l'axe (A2) de pivotement de la pièce intermédiaire, la pièce (K2) intermédiaire du côté de la caméra par rapport à la pièce (T2) intermédiaire du côté de la structure de support et on bloque le dispositif (B2) d'arrêt de la pièce intermédiaire,
- dans lequel, par le blocage du dispositif (BT) d'arrêt du côté de la structure de support, on provoque la poussée du premier coin (71) de blocage sur la surface latérale de la partie (T1) du côté de la structure de support, de manière à produire la fixation par frottement de la pièce (T2) intermédiaire du côté de la structure de support par rapport à la partie (T1) du côté de la structure de support.

12. Procédé suivant la revendication 11,
- dans lequel on débloque le dispositif (BT) d'arrêt du côté de la structure de support, on fait pivoter, autour de l'axe (AT) de pivotement du côté de la structure de support, la pièce (T2) intermédiaire du côté de la structure de support par rapport à la partie (T1) du côté de la structure de support et on bloque le dispositif (BK) d'arrêt du côté de la caméra.
